# EUROPÄISCHE PATENTANMELDUNG

(11) **EP 4 170 844 A1**
(43) Veröffentlichungstag der Anmeldung: **26.04.2023**
(21) Anmeldenummer: 22196448.9
(22) Anmeldetag: 20.09.2022
(51) Int. Cl.: H02J 1/14, H02J 7/00, E01C 19/22

(54) **VERFAHREN ZUM BETREIBEN EINER BODENBEARBEITUNGSMASCHINE**

(30) Priorität: 22.10.2021 DE 102021127444
(71) Anmelder: Hamm AG, 95643 Tirschenreuth (DE)
(72) Erfinder: Dagner, Josef, Altenstadt (DE); Braunschläger, Stefan, Bärnau (DE); Sperber, Michael, Waldsassen (DE)
(74) Vertreter: Ruttensperger Lachnit Trossin Gomoll

(57) **Zusammenfassung**

Bei einem Verfahren zum Betreiben einer Bodenbearbeitungsmaschine, insbesondere Bodenverdichter, wobei die Bodenbearbeitungsmaschine (10) eine Mehrzahl von aus einem Energiespeicher (58) gespeisten Verbrauchern elektrischer Energie umfasst, wird ein Belastungszustand des Energiespeichers (58) erfasst und dann, wenn das Vorliegen eines Zustandes zu hoher Belastung des Energiespeichers (58) erkannt wird, wenigstens ein Verbraucher elektrischer Energie deaktiviert oder/und die Leistungsaufnahme von wenigstens einem Verbraucher elektrischer Energie verringert, oder/und werden zum Vermeiden eines Eintritts in einen Zustand zu hoher Belastung des Energiespeichers (58) Verbraucher elektrischer Energie zeitversetzt in Betrieb gesetzt.

## Beschreibung

Die vorliegende Erfindung betrifft ein Verfahren zum Betreiben einer Bodenbearbeitungsmaschine.

Insbesondere bei rein elektromotorisch angetriebenen Bodenbearbeitungsmaschinen, bei welchen die Energie zum Betreiben von daran vorgesehenen Elektromotoren aus einem Energiespeicher, wie zum Beispiel einer oder mehreren Batterien, entnommen wird, ist die Betriebsdauer durch die in einem derartigen Energiespeicher speicherbare Energie begrenzt. Ferner sind derartige Energiespeicher hinsichtlich des Stromflusses aus diesen, also hinsichtlich des allgemein als Batteriestrom bezeichneten elektrischen Stroms, begrenzt, so dass diese nur eine begrenzte Energie pro Zeit freisetzen und für die Verbraucher elektrischer Energie in einer Bodenbearbeitungsmaschine zur Verfügung stellen können.

Es ist die Aufgabe der vorliegenden Erfindung, ein Verfahren zum Betreiben einer Bodenbearbeitungsmaschine, insbesondere Bodenverdichter, bereitzustellen, mit welchem eine Überlastung eines Energiespeichers vermieden werden kann.

Erfindungsgemäß wird diese Aufgabe gelöst durch ein Verfahren zum Betreiben einer Bodenbearbeitungsmaschine, insbesondere Bodenverdichter, wobei die Bodenbearbeitungsmaschine eine Mehrzahl von aus einem Energiespeicher gespeisten Verbrauchern elektrischer Energie umfasst, bei welchem Verfahren:
- ein Belastungszustand des Energiespeichers erfasst wird und dann, wenn das Vorliegen eines Zustandes zu hoher Belastung des Energiespeichers erkannt wird, wenigstens ein Verbraucher elektrischer Energie deaktiviert wird oder/und die Leistungsaufnahme von wenigstens einem Verbraucher elektrischer Energie verringert wird,
oder/und
- zum Vermeiden eines Eintritts in einen Zustand zu hoher Belastung des Energiespeichers Verbraucher elektrischer Energie zeitversetzt in Betrieb gesetzt werden.

Mit diesem Verfahren wird durch das Betreiben von Verbrauchern elektrischer Energie in einer Bodenbearbeitungsmaschine mit derartiger Leistungsaufnahme bzw. derart aufeinander abgestimmter Leistungsaufnahme, dass das gleichzeitige Betreiben oder in Betrieb setzen von den Energiespeicher stark belastenden Verbrauchern zumindest vorübergehend vermieden wird, die Belastung des Energiespeichers auf einem Niveau gehalten bzw. auf ein Niveau begrenzt, welches einerseits eine Beschädigung des Energiespeichers ausschließt, andererseits einen effizienten Einsatz der im Energiespeicher gespeicherten Energie gewährleistet.

Zum Bereitstellen von Information über die Belastung des Energiespeichers kann ein Stromfluss aus dem Energiespeicher erfasst werden, wobei das Vorliegen eines Zustandes zu hoher Belastung des Energiespeichers dann erkannt wird, wenn eine Stromstärke des Stromflusses aus dem Energiespeicher über einer Schwellenstromstärke liegt. Dabei kann die Stromstärke des jeweils aktuell fließenden elektrischen Stroms oder eine zeitlich gemittelte Stromstärke berücksichtigt werden.

Um unter Berücksichtigung von mit dem erfindungsgemäßen Verfahren vorgenommenen Entlastungsmaßnahmen fortgesetzt dafür sorgen zu können, dass eine Überlastung des Energiespeichers vermieden wird, wird vorgeschlagen, dass dann, wenn nach Deaktivierung wenigstens eines Verbrauchers elektrischer Energie oder/und Verringerung der Leistungsaufnahme von wenigstens einem Verbraucher elektrischer Energie weiterhin das Vorliegen eines Zustandes zu hoher Belastung des Energiespeichers erkannt wird, wenigstens ein weiterer Verbraucher elektrischer Energie deaktiviert wird oder/und die Leistungsaufnahme von wenigstens einem weiteren Verbraucher elektrischer Energie verringert wird.

Zur Minderung der Belastung des Energiespeichers können beispielsweise bei Vorliegen eines Zustandes zu hoher Belastung des Energiespeichers entsprechend einer die Leistungsaufnahme von Verbrauchern elektrischer Energie berücksichtigenden Entlastungsstrategie sukzessive Verbraucher elektrischer Energie mit abnehmender Leistungsaufnahme deaktiviert werden oder/und sukzessive Verbraucher elektrischer Energie mit abnehmender Leistungsaufnahme in ihrer Leistungsaufnahme verringert werden, derart, dass zunächst auf Verbraucher elektrischer Energie mit höherer Leistungsaufnahme eingewirkt wird und bei weiterhin vorliegender zu hoher Belastung des Energiespeichers auf Verbraucher elektrischer Energie mit geringerer Leistungsaufnahme eingewirkt wird.

Bei einer derartigen Entlastungsstrategie, welche die durch verschiedene Verbraucher elektrischer Energie generierte Belastung des Energiespeichers berücksichtigt und bei welcher zunächst auf den Energiespeicher stärker belastende Verbraucher elektrischer Energie eingewirkt werden soll, bevor auch auf den Energiespeicher weniger stark belastende Verbraucher elektrischer Energie eingewirkt wird, um somit eine möglichst effiziente Entlastung des Energiespeichers herbeizuführen, kann sukzessive auf Verbraucher elektrischer Energie in einer Hierarchie mit Hierarchiegruppen a), b) und c) derart eingewirkt wird, dass zunächst auf wenigstens einen Verbraucher elektrischer Energie der Hierarchiegruppe a) eingewirkt wird, bei nach Einwirken auf wenigstens einen Verbraucher elektrischer Energie der Hierarchiegruppe a) weiterhin vorliegender zu hoher Belastung des Energiespeichers auf wenigstens einen Verbraucher elektrischer Energie der Hierarchiegruppe b) eingewirkt wird und bei nach Einwirken auf wenigstens einen Verbraucher elektrischer Energie der Hierarchiegruppe b) weiterhin vorliegender zu hoher Belastung des Energiespeichers auf wenigstens einen Verbraucher elektrischer Energie der Hierarchiegruppe c) eingewirkt wird, wobei die Hierarchiegruppen a), b) und c) folgende Verbraucher elektrischer Energie umfassen:
a) wenigstens einen wenigstens eine Fahr-Hydraulikpumpe antreibenden Elektromotor eines Fahr-Hydraulikkreislaufs,
b) wenigstens einen eine Unwuchtmasse einer einer Bodenbearbeitungswalze zugeordneten Unwuchtanordnung antreibenden Unwucht-Elektroantriebsmotor,
c) wenigstens einen Kleinverbraucher elektrischer Energie, wobei die Kleinverbraucher elektrischer Energie umfassen: einen Kühler-Gebläsemotor für die Kühlung von Elektronikkomponenten oder/und einen Kühler-Gebläsemotor für die Kühlung von Hydraulikfluid oder/und eine Sitzheizung oder/und eine Bedienstandheizung oder/und eine Klimaanlage oder/und eine Wasserpumpe oder/und eine Additivpumpe oder/und eine Arbeitsbeleuchtung oder/und eine Fahrbeleuchtung oder/und eine Audioanlage oder/und einen Frischluft/Umluft-Gebläsemotor oder/und eine Steckdose.

Bei einer alternativen Entlastungsstrategie kann die Relevanz verschiedener Verbraucher elektrischer Energie für den Betrieb einer Bodenbearbeitungsmaschine berücksichtigt werden, indem sukzessive auf Verbraucher elektrischer Energie in einer Hierarchie mit Hierarchiegruppen e), f) und g) derart eingewirkt wird, dass zunächst auf wenigstens einen Verbraucher elektrischer Energie der Hierarchiegruppe e) eingewirkt wird, bei nach Einwirken auf wenigstens einen Verbraucher elektrischer Energie der Hierarchiegruppe e) weiterhin vorliegender zu hoher Belastung des Energiespeichers auf wenigstens einen Verbraucher elektrischer Energie der Hierarchiegruppe f) eingewirkt wird und bei nach Einwirken auf wenigstens einen Verbraucher elektrischer Energie der Hierarchiegruppe f) weiterhin vorliegender zu hoher Belastung des Energiespeichers auf wenigstens einen Verbraucher elektrischer Energie der Hierarchiegruppe g) eingewirkt wird, wobei die Hierarchiegruppen e), f) und g) folgende Verbraucher elektrischer Energie umfassen:
e) wenigstens einen Kleinverbraucher elektrischer Energie, wobei die Kleinverbraucher elektrischer Energie umfassen: einen Kühler-Gebläsemotor für die Kühlung von Elektronikkomponenten oder/und einen Kühler-Gebläsemotor für die Kühlung von Hydraulikfluid oder/und eine Sitzheizung oder/und eine Bedienstandheizung oder/und eine Klimaanlage oder/und eine Wasserpumpe oder/und eine Additivpumpe oder/und eine Arbeitsbeleuchtung oder/und eine Fahrbeleuchtung oder/und eine Audioanlage oder/und einen Frischluft/Umluft-Gebläsemotor oder/und eine Steckdose,
f) wenigstens einen wenigstens eine Fahr-Hydraulikpumpe antreibenden Fahr-Elektromotor eines Fahr-Hydraulikkreislaufs,
g) wenigstens einen eine Unwuchtmasse einer einer Bodenbearbeitungswalze zugeordneten Unwuchtanordnung antreibenden Unwucht-Elektroantriebsmotor.

Bei einer derartigen Strategie werden also zunächst derartige Verbraucher elektrischer Energie deaktiviert bzw. in ihrer Leistungsaufnahme verringert, welche hinsichtlich des angestrebten Erfolgs, also beispielsweise einer zu erreichenden Verdichtung eines Bodens, unmittelbar einen geringeren Einfluss haben. Erst dann, wenn eine Einwirkung auf derartige für das unmittelbare Arbeitsergebnis weniger relevante Verbraucher elektrischer Energie zu keiner ausreichenden Entlastung des Energiespeichers führt, wird sukzessive auf für das Arbeitsergebnis relevantere Verbraucher elektrischer Energie zugegriffen und auf diese derart eingewirkt, dass eine weitergehende Entlastung des Energiespeichers erreicht wird.

Die Bodenbearbeitungsmaschine kann wenigstens zwei Bodenbearbeitungswalzen mit jeweils einer Unwuchtanordnung mit wenigstens einer durch wenigstens einen Unwucht-Elektroantriebsmotor zur Drehung antreibbaren Unwuchtmasse umfassen, wobei dann, wenn bei in Betrieb gesetzten Unwuchtanordnungen der wenigstens zwei Bodenbearbeitungswalzen das Vorliegen eines Zustandes übermäßiger Belastung des Energiespeichers erkannt wird, die einer der Bodenbearbeitungswalzen zugeordnete Unwuchtanordnung deaktiviert wird oder mit geringerer Drehzahl betrieben wird, und wobei bei weiterhin vorliegender zu hoher Belastung des Energiespeichers die einer anderen der Bodenbearbeitungswalzen zugeordnete Unwuchtanordnung deaktiviert wird oder mit geringerer Drehzahl betrieben wird.

Weiter kann vorgesehen sein, dass die Bodenbearbeitungsmaschine wenigstens zwei Bodenbearbeitungswalzen mit jeweils einer Unwuchtanordnung mit wenigstens einer durch wenigstens einen Unwucht-Elektroantriebsmotor zur Drehung antreibbaren Unwuchtmasse umfasst, wobei die einer der Bodenbearbeitungswalzen zugeordnete Unwuchtanordnung eine Vibrationsanordnung zur Erzeugung einer im Wesentlichen orthogonal zu einer Drehachse der einen Bodenbearbeitungswalze wirkenden Kraft umfasst und die einer anderen der Bodenbearbeitungswalzen zugeordnete Unwuchtanordnung eine Oszillationsanordnung zur Erzeugung einer im Wesentlichen tangential zu einer Drehachse der anderen Bodenbearbeitungswalze wirkenden Kraft umfasst, wobei dann, wenn bei in Betrieb gesetzten Unwuchtanordnungen der wenigstens zwei Bodenbearbeitungswalzen das Vorliegen eines Zustandes übermäßiger Belastung des Energiespeichers erkannt wird, die der anderen der Bodenbearbeitungswalzen zugeordnete Unwuchtanordnung deaktiviert oder mit geringerer Drehzahl betrieben wird, und wobei bei weiterhin vorliegender zu hoher Belastung des Energiespeichers die der einen der Bodenbearbeitungswalzen zugeordnete Unwuchtanordnung deaktiviert wird oder mit geringerer Drehzahl betrieben wird.

Bei einer weiteren Ausgestaltung kann die Bodenbearbeitungsmaschine wenigstens eine Bodenbearbeitungswalze mit einer Unwuchtanordnung mit wenigstens einer durch wenigstens einen Unwucht-Elektroantriebsmotor zur Drehung antreibbaren Unwuchtmasse umfassen, wobei die Unwuchtanordnung in einem Vibrationsbetrieb zur Erzeugung einer im Wesentlichen orthogonal zu einer Drehachse der Bodenbearbeitungswalze wirkenden Kraft und in einem Oszillationsbetrieb zur Erzeugung einer im Wesentlichen tangential zu einer Drehachse der Bodenbearbeitungswalze wirkenden Kraft betreibbar ist, wobei dann, wenn bei im Oszillationsbetrieb betriebener Unwuchtanordnung der wenigstens einen Bodenbearbeitungswalze das Vorliegen eines Zustandes übermäßiger Belastung des Energiespeichers erkannt wird, der Oszillationsbetrieb der Unwuchtanordnung beendet oder mit geringerer Drehzahl fortgesetzt wird, oder/und dann, wenn bei im Vibrationsbetrieb betriebener Unwuchtanordnung der wenigstens einen Bodenbearbeitungswalze das Vorliegen eines Zustandes übermäßiger Belastung des Energiespeichers erkannt wird, der Vibrationsbetrieb beendet wird oder mit geringerer Drehzahl fortgesetzt wird.

Eine vollständig elektrisch betriebene Bodenbearbeitungsmaschine kann wenigstens einen wenigstens eine Fahr-Hydraulikpumpe antreibenden Fahr-Elektromotor eines Fahr-Hydraulikkreislaufs und wenigstens einen wenigstens eine Lenk-Hydraulikpumpe antreibenden Lenk-Elektromotor eines Lenk-Hydraulikkreislaufs umfassen. Um bei einer derartigen Bodenbearbeitungsmaschine das Auftreten eines Überlastungszustandes des Energiespeichers zu verhindern, kann bei Inbetriebnahme der Bodenbearbeitungsmaschine wenigstens ein, vorzugsweise jeder Lenk-Elektromotor vor wenigstens einem, vorzugsweise jedem Fahr-Elektromotor in Betrieb gesetzt werden. Es ist somit auch bei entlastetem Energiespeicher gewährleistet, dass dann, wenn die Bodenbearbeitungsmaschine beginnt, sich auf dem zu bearbeitenden Boden zu bewegen, auch eine ausreichende Lenkunterstützung bzw. Lenkbarkeit der Bodenbearbeitungsmaschine vorhanden ist.

Insbesondere dann, wenn die Bodenbearbeitungsmaschine als Bodenverdichter aufgebaut ist, kann diese wenigstens eine Bodenbearbeitungswalze mit einer Unwuchtanordnung mit wenigstens einer durch wenigstens einen Unwucht-Elektroantriebsmotor zur Drehung antreibbaren Unwuchtmasse umfassen. Zum Vermeiden einer übermäßigen Belastung des Energiespeichers kann bei Inbetriebnahme der Bodenbearbeitungsmaschine wenigstens ein, vorzugsweise jeder Fahr-Elektromotor vor wenigstens einem, vorzugsweise jedem Unwucht-Elektroantriebsmotor in Betrieb gesetzt.

Bei dem erfindungsgemäßen Verfahren kann weiter ein Ladezustand des Energiespeichers erfasst werden und dann, wenn das Vorliegen eines Zustandes zu geringer Ladung des Energiespeichers erkannt wird, kann wenigstens ein Verbraucher elektrischer Energie deaktiviert werden oder/und die Leistungsaufnahme von wenigstens einem Verbraucher elektrischer Energie verringert werden.

Die vorliegende Erfindung wird nachfolgend mit Bezug auf die beiliegenden Figuren detailliert beschrieben. Es zeigt:
- Fig. 1: eine als Bodenverdichter ausgebildete Bodenbearbeitungsmaschine;
- Fig. 2: in vereinfachter Darstellung den Aufbau eines Hydrauliksystems der Bodenbearbeitungsmaschine der Fig. 2;
- Fig. 3: vereinfacht eine einer Bodenbearbeitungswalze der Bodenbearbeitungsmaschine der Fig. 1 zugeordneten Unwuchtanordnung.

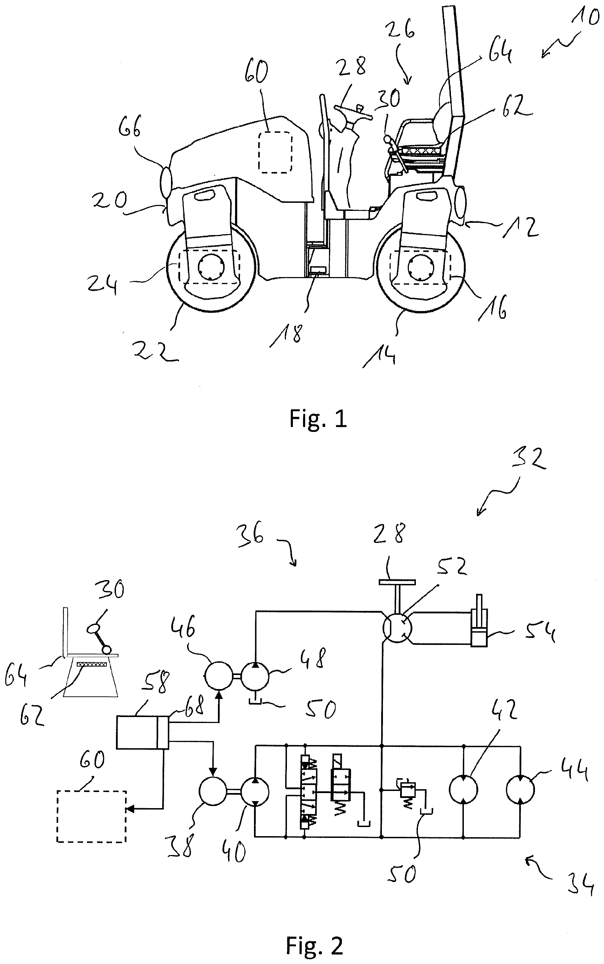

Die in Fig. 1 dargestellte und als Bodenverdichter aufgebaute Bodenbearbeitungsmaschine 10 umfasst an einem Hinterwagen 12 eine Bodenbearbeitungswalze 14 mit einer dieser zugeordneten und wenigstens teilweise in derselben angeordneten Unwuchtanordnung 16. An einem in einem Gelenkverbindungsbereich 18 mit dem Hinterwagen 12 zum Lenken der Bodenbearbeitungsmaschine 10 schwenkbar verbundenen Vorderwagen 20 umfasst die Bodenbearbeitungsmaschine 10 eine weitere Bodenbearbeitungswalze 22 mit einer dieser zugeordneten und wenigstens teilweise in derselben angeordneten Unwuchtanordnung 24. Am Hinterwagen 12 ist ferner ein im dargestellten Ausgestaltungsbeispiel offen ausgebildeter Bedienstand 26 vorgesehen, von welchem aus eine Bedienperson beispielsweise ein Lenkrad 28 zum Lenken des Bodenverdichters und einen Fahrhebel 30 zum Vorgeben der Fahrgeschwindigkeit des Bodenverdichters entweder in einer Vorwärtsfahrrichtung oder einer Rückwärtsfahrrichtung bedienen kann.

Ein an dem Bodenverdichter 10 vorgesehenes Hydrauliksystem 32 ist in Fig. 2 in vereinfachter, prinzipartiger Darstellung gezeigt. Das Hydrauliksystem 32 umfasst als wesentliche Bestandteile einen Fahr-Hydraulikkreislauf 34 und einen Lenk-Hydraulikkreislauf 36.

Der Fahr-Hydraulikkreislauf 34 umfasst eine durch einen Fahr-Elektromotor 38 angetriebene Fahr-Hydraulikpumpe 40 und zwei Fahr-Hydraulikmotoren 42, 44, wobei der Fahr-Hydraulikmotor 42 der am Hinterwagen vorgesehenen Bodenbearbeitungswalze 14 zugeordnet sein kann und der Fahr-Hydraulikmotor 44 der am Vorderwagen 20 vorgesehenen Bodenbearbeitungswalze 22 zugeordnet sein kann, um diese bei durch den Fahr-Elektromotor 38 betriebener Fahr-Hydraulikpumpe 40 in Drehung zu versetzen.

Der Lenk-Hydraulikkreislauf 36 umfasst eine durch einen Lenk-Elektromotor 46 angetriebene Lenk-Hydraulikpumpe 48. Diese fördert für Fluid, beispielsweise Hydrauliköl, aus einem Reservoir 50 zu einem Lenkaggregat 52, welches eine Drehbewegung des Lenkrads 28 in eine Stellbewegung von einer oder zwei Lenk-Kolben/Zylinder-Einheit 54 umsetzt, um dadurch den Vorderwagen 20 und den Hinterwagen 12 im Gelenkverbindungsbereich 18 bezüglich einander zu verschwenken und somit den Bodenverdichter 10 zu lenken. Das durch die Lenk-Hydraulikpumpe 48 geförderte Fluid kann über den Fahr-Hydraulikkreislauf 34 in das Reservoir 50 zurückgespeist werden.

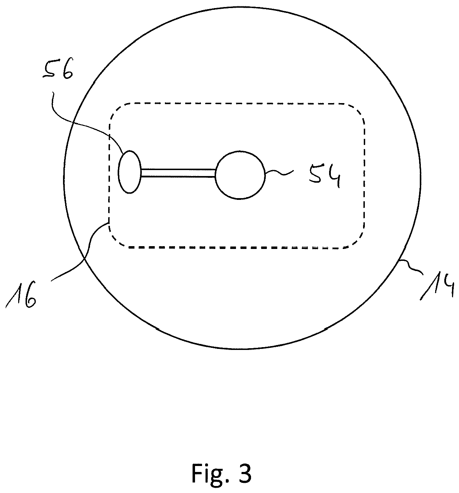

Bei dem Hydrauliksystem 32 stellen der Fahr-Elektromotor 38 und der Lenk-Elektromotor 46 Verbraucher elektrischer Energie dar. Weitere Verbraucher elektrischer Energie sind in den Unwuchtanordnungen 16, 24 zu finden. Wie beispielhaft anhand der Unwuchtanordnung 16 der Bodenbearbeitungswalze 14 in Fig. 3 veranschaulicht, umfasst jede derartige Unwuchtanordnung zumindest einen Unwucht-Elektroantriebsmotor 54, welcher wenigstens eine mit zu einer Unwuchtdrehachse U exzentrischen Massenschwerpunkt M ausgebildete Unwuchtmasse 56 zur Drehung um die Unwuchtachse U antreibt. Bei dem in Fig. 3 veranschaulichten Ausgestaltungsbeispiel einer Unwuchtanordnung 16 entspricht die Unwuchtdrehachse U der Drehachse D der Bodenbearbeitungswalze 14, so dass durch die um die Unwuchtachse U rotierende Unwuchtmasse 56 eine im Wesentlichen orthogonal zur Walzendrehachse D orientierte Kraft auf die Bodenbearbeitungswalze 14 ausgeübt wird und diese somit in eine Vibrationsbewegung versetzt wird. Die in dieser Art und Weise aufgebaute bzw. betreibbare Unwuchtanordnung 16 stellt somit eine Vibrationsanordnung bereit.

Bei einer alternativen Ausgestaltungsart einer derartigen Unwuchtanordnung 16, 24 können zumindest zwei Unwuchtmassen mit bezüglich der Walzendrehachse D versetzten und dazu parallelen Unwuchtdrehachsen vorgesehen sein, wobei die Unwuchtdrehachse dieser Unwuchtmassen bezüglich der Walzendrehachse D einander gegenüberliegend angeordnet sein können. Derartige Unwuchtanordnungen können so betrieben werden, dass sie eine bezüglich der Walzendrehachse tangentiale Kraft erzeugen und somit die Bodenbearbeitungswalze in eine Oszillationsbewegung versetzen, bei welcher diese periodisch zur Drehung um die Walzendrehachse beschleunigt bzw. verzögert wird. In diesem Falle bildet die Unwuchtanordnung eine Oszillationsanordnung. Eine derartige mit zwei bzw. zumindest zwei Unwuchtmassen mit zur Walzendrehachse versetzten Unwuchtdrehachsen aufgebaute Unwuchtanordnung kann alternativ auch so betrieben werden, dass durch die rotierenden Unwuchtmassen eine orthogonal zur Walzendrehachse gerichtete Kraft erzeugt wird, so dass in diesem Falle eine derartige Unwuchtanordnung als Vibrationsanordnung betrieben werden kann.

Der Unwucht-Elektroantriebsmotor 54 der Unwuchtanordnung 16 bzw. jeder an der Bodenbearbeitungsmaschine 10 vorgesehene Unwucht-Elektroantriebsmotor 54 stellt einen Verbraucher elektrischer Energie bereit, der, so wie auch der Fahr-Elektromotor 38 und der Lenk-Elektromotor 46, aus einem Energiespeicher 58, beispielsweise zumindest einer Batterie, mit elektrischer Energie gespeist wird. Auch weitere Verbraucher elektrischer Energie werden aus dem Energiespeicher 58 mit elektrischer Energie gespeist. Diese weiteren Verbraucher elektrischer Energie, welche in den Fig. 1 und 2 allgemein mit 60 bezeichnet sind, können allgemein als Kleinverbraucher bezeichnet werden, deren Energieverbrauch insbesondere im Vergleich zum Energieverbrauch des Fahr-Elektromotors 38, des Lenk-Elektromotors 46 bzw. jedes Unwucht-Elektroantriebsmotors 54 vergleichsweise gering ist. Derartige Kleinverbraucher 60 können beispielsweise eine in den Fig. 1 und 2 dargestellte Sitzheizung 62 an einem Bedienpersonsitz 64 im Bedienstand 26 umfassen und können beispielsweise auch einen Kühler-Gebläsemotor umfassen, durch welchen ein Gebläse zum Kühlen von Elektronikkomponenten angetrieben wird. Ferner können derartige Kleinverbraucher 60 insbesondere bei einem geschlossen ausgebildeten Bedienstand 26 eine Bedienstandheizung bzw. eine Klimaanlage umfassen. Ist an der Bodenbearbeitungsmaschine 10 in Zuordnung zu zumindest einer der Bodenbearbeitungswalze 14, 22 eine Berieselungsanlage vorgesehen, mit welcher diese zum Vermeiden des Anhaftens von zu verdichtendem Material berieselt werden kann, können die Kleinverbraucher 60 eine Wasserpumpe bzw. eine Additivpumpe umfassen, um beispielsweise durch das Mischen von Wasser und flüssigem Additiv ein Gemisch zur Berieselung der Oberflächen der Bodenbearbeitungswalzen 14, 22 zu erzeugen bzw. diese Flüssigkeiten auf die Oberflächen der Bodenbearbeitungswalzen 14, 22 zu sprühen. Auch eine in Fig. 1 dargestellte Fahrbeleuchtung 66, welche erforderlich ist, um die Bodenbearbeitungsmaschine 10 auf öffentlichen Straßen bewegen zu dürfen, bzw. eine spezielle Arbeitsbeleuchtung, um den Arbeitsbereich besser ausleuchten zu können, können als Kleinverbraucher 60 vorgesehen sein, ebenso wie eine im Bereich des Bedienstands 26 vorgesehene Audioanlage oder eine Steckdose, über welche zusätzliche Geräte an der Bodenbearbeitungsmaschine 10 mit elektrischer Energie versorgt werden können. Auch ein Gebläsemotor eines Frischluft/Umluft-Gebläses für den Bedienstand 26 kann insbesondere dann, wenn dieser geschlossen ausgebildet ist, als Kleinverbraucher 60 vorgesehen sein.

Als Batterien, beispielsweise Lithiumionen-Batterien, ausgebildete Energiespeicher 58 sind im Betrieb nur begrenzt belastbar, was bedeutet, dass sie nur mit einem begrenzten Stromfluss von beispielsweise mehreren 100 A betrieben werden können. Höhere Stromflüsse aus einem derartigen Energiespeicher können zu einer Schädigung desselben führen und müssen daher vermieden werden. Gleichwohl können insbesondere dann, wenn bei dem Bodenverdichter 10 eine Vielzahl von Verbrauchern elektrischer Energie gleichzeitig aus dem Energiespeicher 58 zu speisen ist, Zustände auftreten, in welchen der Stromfluss aus dem Energiespeicher 58 zu hoch wird und beispielsweise eine Schwellenstromstärke übersteigt.

Um das Auftreten derartiger Zustände erkennen zu können, ist dem Energiespeicher 58 eine beispielsweise einen Stromsensor umfassende Belastungsüberwachungsanordnung 68 zugeordnet, welche ein dem Stromfluss entsprechendes Signal ausgibt. Dieses Signal kann in einer Steuereinheit des Bodenverdichters 10 ausgewertet und als Grundlage für die Ansteuerung bzw. das Betreiben der verschiedenen an der Bodenbearbeitungsmaschine 10 vorgesehenen Verbraucher elektrischer Energie in der nachfolgend beschriebenen Art und Weise genutzt werden.

Bei der Inbetriebnahme der Bodenbearbeitungsmaschine 10 kann zum Vermeiden eines Überlastungszustands des Energiespeichers 58 so vorgegangen werden, dass insbesondere Verbraucher elektrischer Energie, welche eine hohe Leistungsaufnahme haben und zu einer starken Belastung des Energiespeichers 58, also einem hohen Stromfluss, beitragen, nicht gleichzeitig in Betrieb genommen werden. Zum Beispiel kann vorgesehen sein, dass dann, wenn die Bodenbearbeitungsmaschine 10 in Betrieb gesetzt werden soll, d. h. wenn beispielsweise in einem Verdichtungsbetrieb gearbeitet werden soll, zunächst der Lenk-Elektromotor 46 in Betrieb gesetzt wird, um im Lenk-Hydraulikkreislauf 36 einen ausreichenden Fluiddruck bereitzustellen, so dass die Lenkbarkeit der Bodenbearbeitungsmaschine 10 gewährleistet ist. Mit zeitlicher Verzögerung zum Inbetriebsetzen des Lenk-Elektromotors 46 kann dann der Fahr-Elektromotor 38 aktiviert werden, also mit einer Spannung beaufschlagt werden, um die Fahr-Hydraulikpumpe 40 anzutreiben und dadurch die Bodenbearbeitungsmaschine 10 in Bewegung zu versetzen. Da insbesondere in Phasen, in welchen die Elektromotoren 46, 38 in Betrieb gesetzt werden, ein vergleichsweise hoher Stromfluss auftritt, wird durch den zeitlichen Versatz beim Aktivieren der beiden Elektromotoren 46, 38 dafür gesorgt, dass deren Belastungsspitzen nicht gleichzeitig auftreten.

Ist die Bodenbearbeitungsmaschine 10 dann in Bewegung versetzt, können auch die den Unwuchtanordnungen 16, 24 zugeordneten Unwucht-Elektroantriebsmotoren 54 erregt werden. Hier kann beispielsweise so vorgegangen werden, dass die bei den beiden Unwuchtanordnungen 16, 24 vorgesehenen Unwucht-Elektroantriebsmotoren 54 gleichzeitig in Betrieb gesetzt werden. Um auch in dieser Phase das gleichzeitige Auftreten von Belastungsspitzen zu vermeiden, kann alternativ vorgesehen sein, dass die bei den beiden Unwuchtanordnungen 16, 24 vorgesehenen Unwucht-Elektromotoren 54 zeitlich versetzt zueinander in Betrieb genommen werden, so dass einer dieser Unwucht-Elektroantriebsmotoren 54 beispielsweise erst dann bestromt wird, wenn der andere der Unwucht-Elektroantriebsmotoren 54 bereits mit einer Drehzahl dreht, die im Bereich der für den Unwuchtbetrieb vorgesehenen Soll-Drehzahl liegt. Weist eine oder weisen beide Unwuchtanordnungen 16, 24 mehrere Unwucht-Elektroantriebsmotoren 54 auf, so können auch diese versetzt zueinander in Betrieb genommen werden.

In dieser Phase der Inbetriebnahme des Bodenverdichters 10 können zum Vermeiden von Belastungsspitzen am Energiespeicher 58 derartige Verbraucher elektrischer Energie, welche für den Betreib des Bodenverdichters 10 eine untergeordnete Rolle spielen, deaktiviert bleiben bzw. mit geringerer Leistungsaufnahme betrieben werden. Dies betrifft beispielsweise die Kleinverbraucher 60. So kann beispielsweise bei der Inbetriebnahme der Bodenbearbeitungsmaschine 10 darauf verzichtet werden, die Sitzheizung 62 zu betreiben oder eine Klimaanlage auf voller Leistungsstärke zu betreiben.

Ist die Bodenbearbeitungsmaschine 10 in Betrieb, bewegt sich diese also beispielsweise zum Verdichten von Asphaltmaterial über den zu verdichtenden Boden, kann nicht ausgeschlossen werden, dass ein Zustand auftritt, in welchem der Stromfluss aus dem Energiespeicher 58 die Schwellenstromstärke erreicht bzw. übersteigt. Dies kann beispielsweise der Fall sein, wenn die zunächst auf einem im Wesentlichen horizontalen Boden sich bewegende Bodenbearbeitungsmaschine 10 in den Bereich eines Gefälles bewegt wird, also bergauf bewegt werden soll. Soll in einem derartigen Zustand die Fahrgeschwindigkeit der Bodenbearbeitungsmaschine 10 beibehalten werden, kann dies zu einer substantiellen Zunahme der durch den Fahr-Elektromotor 38 ausgeübten Belastung des Energiespeichers 58 führen.

Tritt ein derartiger Zustand zu hoher Belastung des Energiespeichers 58 auf, was beispielsweise durch Erreichen bzw. Übersteigen der Schwellenstromstärke erkennbar wird, können verschiedene Maßnahmen ergriffen werden, welche die Belastung des Energiespeichers 58 senken. Insbesondere können verschiedene Strategien vorgesehen werden, um die Belastung des Energiespeichers 58 zu senken.

Beispielsweise kann eine derartige Entlastungsstrategie vorsehen, dass zunächst Maßnahmen ergriffen werden, mit welchen eine vergleichsweise starke Senkung der Belastung des Energiespeichers 58 erreicht wird. Da, wie vorangehend angeführt, im Allgemeinen davon auszugehen ist, dass der Fahr-Elektromotor 38 den Energiespeicher 58 am stärksten belastet, kann also beispielsweise zunächst in einer derartigen Entlastungsstrategie auf den Fahr-Elektromotor 38 eingewirkt werden, um dessen Drehzahl und damit die Geschwindigkeit, mit welcher die Bodenbearbeitungsmaschine 10 sich über den zu bearbeitenden Boden bewegt, zu senken. Diese Senkung der Fahrgeschwindigkeit der Bodenbearbeitungsmaschine 10 kann beispielsweise in mehreren Schritten oder kontinuierlich oder beispielsweise zwischen einzelnen Schritten kontinuierlich erfolgen bis zu einer minimalen Fahrgeschwindigkeit, welche zum Erreichen des gewünschten Bearbeitungsergebnisses nicht unterschritten werden kann.

Führt die Verringerung der Fahrgeschwindigkeit durch entsprechende Ansteuerung des Fahr-Elektromotors 38 nicht zum gewünschten Ergebnis, können in der an der Leistungsaufnahme orientierten Hierarchie dann weitere Systembereiche zum Verringern der Belastung des Elektrospeichers 58 angesteuert werden. Als derartige Systembereiche können beispielsweise die Unwuchtanordnungen 16, 24 bzw. deren Unwucht-Elektroantriebsmotoren 54 betrachtet werden. Ist die Belastung des Energiespeichers 58 auch bei verringerter Fahrgeschwindigkeit der Bodenbearbeitungsmaschine 10 noch zu hoch, kann in einer nächsten Stufe der Entlastung auf die Unwuchtanordnungen 16, 24 eingewirkt werden. Dabei kann beispielsweise derart vorgegangen werden, dass zunächst eine der Unwuchtanordnungen deaktiviert wird oder deren Unwuchtmasse 56 mit geringerer Drehzahl zur Drehung um die zugeordnete Unwuchtdrehachse U angetrieben wird. Führt das Verringern der Drehzahl bei einer der Unwuchtanordnungen 16, 24 bei normal weiter betriebener anderer Unwuchtanordnung nicht zu einer ausreichenden Entlastung des Energiespeichers 58, kann die in ihrer Leistungsaufnahme bereits verringerte Unwuchtanordnung dann vollständig deaktiviert werden, während die andere Unwuchtanordnung weiter normal betrieben werden kann, oder es kann zusätzlich auch die andere Unwuchtanordnung in ihrer Leistungsaufnahme reduziert werden und deren Unwuchtmasse 56 mit verringerter Drehzahl angetrieben werden. Auch dieses Verringern der Leistungsaufnahme in einer oder in beiden Unwuchtanordnungen 16, 24 kann ggf. in mehreren Stufen erfolgen. Führt die Verringerung der Leistungsaufnahme oder die Deaktivierung einer der Unwuchtanordnungen 16, 24 nicht zu einer ausreichenden Entlastung des Energiespeichers 58, kann auch die andere Unwuchtanordnung deaktiviert werden bzw. in ihrer Leistungsaufnahme verringert werden, so dass zumindest vorübergehend keine der Unwuchtanordnungen 16, 24 betrieben wird und keine der Bodenbearbeitungswalzen 14, 22 in eine Vibrationsbewegung versetzt wird.

Bei einer weiteren Variante könnten in beiden Bodenbearbeitungswalzen 14, 22 Unwuchtanordnungen 16, 24 vorgesehen sein, die sowohl im Oszillationsbetrieb, als auch im Vibrationsbetrieb betrieben werden können. In diesem Falle kann zum Verringern der Belastung des Energiespeichers 58 dann, wenn eine der Unwuchtanordnungen 16, 24 im Oszillationsbetrieb betrieben wird, bei dieser der Oszillationsbetrieb beispielsweise mit verringerter Drehzahl fortgesetzt werden, während beispielsweise die Unwuchtanordnung der jeweils anderen Bodenbearbeitungswalze unverändert im Vibrationsbetrieb weiter betrieben wird. Ist auch die dadurch eingeführte Entlastung des Energiespeichers 58 nicht ausreichend, kann der Oszillationsbetrieb beendet werden, während bei der anderen Bodenbearbeitungswalze zunächst der Vibrationsbetrieb noch aufrecht erhalten wird. Zur weiteren Entlastung des Energiespeichers 58 kann auch dieser Vibrationsbetrieb mit verringerter Drehzahl fortgesetzt werden, und, falls auch dies nicht zu einer ausreichenden Entlastung des Energiespeichers 58 führt, auch die zunächst noch im Vibrationsbetrieb betriebene Unwuchtanordnung vollständig deaktiviert werden. Grundsätzlich kann auch zunächst die im Vibrationsbetrieb arbeitende Unwuchtanordnung sukzessive in ihrer Leistungsaufnahme verringert werden, bevor gegebenenfalls auch auf die im Oszillationsbetrieb arbeitende Unwuchtanordnung zur Verringerung der Leistungsaufnahme eingewirkt wird.

Führt auch diese in einer zweiten Stufe der Entlastungshierarchie vorgesehene Einwirkung insbesondere auf die verschiedenen Unwuchtanordnungen nicht zu einer ausreichenden Entlastung des Energiespeichers 58, kann in einer dritten Stufe der Entlastungshierarchie auf die Kleinverbraucher 60 eingewirkt werden, um durch Deaktivieren zumindest eines Teils der Kleinverbraucher 60 oder/und durch Verringern der Leistungsaufnahme zumindest eines Teils der Kleinverbraucher 60 dem Stromfluss aus dem Energiespeicher 58 weiter zu senken.

Bei einer alternativen Strategie zur Entlastung des Energiespeichers 58 kann die Priorität hinsichtlich der Einwirkung auf verschiedene Verbraucher elektrischer Energie nicht anhand des jeweils erreichten Beitrags zur Entlastung vorgenommen werden, sondern anhand der Relevanz eines jeweiligen Verbrauchers für den durchzuführenden Betrieb. Soll beispielsweise mit der Bodenbearbeitungsmaschine 10 ein Boden verdichtet werden, so sind eine ausreichende Drehzahl bei den jeweiligen Unwuchtanordnungen 16, 24 und eine ausreichende Fahrgeschwindigkeit der Bodenbearbeitungsmaschine 10 von übergeordneter Bedeutung, während beispielsweise eine ausreichende Erwärmung des Bedienstands 26 oder ein vollständiges Ausleuchten des zu bearbeitenden Bodens von untergeordneter Bedeutung sind. Bei derartiger Priorisierung kann also beispielsweise vorgesehen sein, dass bei Erkennen eines Überlastungszustands des Energiespeichers 58 zunächst auf die Kleinverbraucher 60 eingewirkt wird und diese, soweit sie für den Betrieb nicht zwingend erforderlich sind, deaktiviert werden bzw. in ihrer Leistungsaufnahme verringert werden. So kann beispielsweise ein Kühler-Gebläsemotor mit geringerer Drehzahl betrieben werden, ebenso wie ein Gebläsemotor für ein Frischluft/Umluft-Gebläse. Auch eine Sitzheizung bzw. eine Heizung für den Bedienzustand können, da sie für das angestrebte Arbeitsergebnis nicht unmittelbar von Relevanz sind, in einer ersten Stufe der Entlastungshierarchie deaktiviert bzw. mit geringerer Leistungsaufnahme betrieben werden.

Führt diese erste Stufe der Entlastung nicht zu einer ausreichenden Entlastung des Energiespeichers 58, kann in einer zweiten Stufe dieser Entlastungshierarchie auf den Fahr-Elektromotor 38 eingewirkt werden, um durch Verringerung von dessen Drehzahl auch dessen Leistungsaufnahme und damit einhergehend die Fahrgeschwindigkeit der Bodenbearbeitungsmaschine 10 zu senken. Dies liefert einen substantiellen Beitrag zur Entlastung des Energiespeichers 58.

Da die Fahrgeschwindigkeit der Bodenbearbeitungsmaschine 10 für das Arbeitsergebnis im Allgemeinen von geringerer Bedeutung ist, als der Betrieb der Unwuchtanordnung 16, 24, wird auf die Unwuchtanordnungen 16, 24 beispielsweise in der vorangehend detailliert dargelegten Art und Weise in einer dritten Stufe der Entlastungshierarchie erst dann eingewirkt, wenn das Verringern der Fahrgeschwindigkeit, also die Einwirkung auf den Fahr-Elektromotor 38, noch nicht zu einer ausreichenden Entlastung des Energiespeichers 58 beigetragen hat.

Vorangehend wurden verschiedene Maßnahmen beschrieben, welche vorzugsweise in definiert aufeinander abgestimmter Art und Weise einzeln bzw. auch in Zusammenwirkung dazu genutzt werden können, um im Betrieb einer Bodenbearbeitungsmaschine 10 den die verschiedenen Verbraucher elektrischer Energie speisenden Energiespeicher 58 nicht übermäßig zu belasten bzw. dann, wenn ein Überlastungszustand aufgetreten ist, wieder zu entlasten. Diese Maßnahmen werden bevorzugt im Rahmen der vorangehend dargelegten Hierarchien aufeinander abgestimmt ergriffen, können selbstverständlich jedoch auch beliebig, beispielsweise durch manuelle Interaktion einer Bedienperson, ergriffen werden, wenn ein jeweiliger Betriebszustand der Bodenbearbeitungsmaschine 10 dies als vorteilhaft erscheinen lässt.

Die erfindungsgemäß vorzunehmenden Maßnahmen zur Entlastung eines Energiespeichers können bei verschiedenst gestalteten Bodenbearbeitungsmaschinen bzw. Bodenverdichtern angewandt werden. Wie in Fig. 1 dargestellt, kann eine derartige Bodenbearbeitungsmaschine zwei in einer Längsrichtung derselben aufeinander folgend angeordnete Bodenbearbeitungswalzen aufweisen. Alternativ kann eine derartige Bodenbearbeitungsmaschine beispielsweise nur am Vorderwagen eine Bodenbearbeitungswalze aufweisen, während am Hinterwagen Antriebsräder vorgesehen sind. Als Bodenbearbeitungswalzen können auch um eine gemeinsame Drehachse drehbare Gummiradwalzen vorgesehen sein, und es können zwei mit einem Metallmantel aufgebaute Bodenbearbeitungswalzen nebeneinander, also in Richtung einer Walzendrehachse aufeinander folgend angeordnet sein.

## Patentansprüche

1. Verfahren zum Betreiben einer Bodenbearbeitungsmaschine, insbesondere Bodenverdichter, wobei die Bodenbearbeitungsmaschine (10) eine Mehrzahl von aus einem Energiespeicher (58) gespeisten Verbrauchern elektrischer Energie umfasst, bei welchem Verfahren:
- ein Belastungszustand des Energiespeichers (58) erfasst wird und dann, wenn das Vorliegen eines Zustandes zu hoher Belastung des Energiespeichers (58) erkannt wird, wenigstens ein Verbraucher elektrischer Energie deaktiviert wird oder/und die Leistungsaufnahme von wenigstens einem Verbraucher elektrischer Energie verringert wird,
oder/und
- zum Vermeiden eines Eintritts in einen Zustand zu hoher Belastung des Energiespeichers (58) Verbraucher elektrischer Energie zeitversetzt in Betrieb gesetzt werden.

2. Verfahren nach Anspruch 1,
**dadurch gekennzeichnet, dass** ein Stromfluss aus dem Energiespeicher (58) erfasst wird, wobei das Vorliegen eines Zustandes zu hoher Belastung des Energiespeichers (58) dann erkannt wird, wenn eine Stromstärke des Stromflusses aus dem Energiespeicher (58) über einer Schwellenstromstärke liegt.

3. Verfahren nach Anspruch 1 oder 2,
**dadurch gekennzeichnet, dass** dann, wenn nach Deaktivierung wenigstens eines Verbrauchers elektrischer Energie oder/und Verringerung der Leistungsaufnahme von wenigstens einem Verbraucher elektrischer Energie weiterhin das Vorliegen eines Zustandes zu hoher Belastung des Energiespeichers (58) erkannt wird, wenigstens ein weiterer Verbraucher elektrischer Energie deaktiviert wird oder/und die Leistungsaufnahme von wenigstens einem weiteren Verbraucher elektrischer Energie verringert wird.

4. Verfahren nach einem der Ansprüche 1-3,
**dadurch gekennzeichnet, dass** bei Vorliegen eines Zustandes zu hoher Belastung des Energiespeichers (58) entsprechend einer die Leistungsaufnahme von Verbrauchern elektrischer Energie berücksichtigenden Entlastungsstrategie sukzessive Verbraucher elektrischer Energie mit abnehmender Leistungsaufnahme deaktiviert werden oder/und sukzessive Verbraucher elektrischer Energie mit abnehmender Leistungsaufnahme in ihrer Leistungsaufnahme verringert werden, derart, dass zunächst auf Verbraucher elektrischer Energie mit höherer Leistungsaufnahme eingewirkt wird und bei weiterhin vorliegender zu hoher Belastung des Energiespeichers (58) auf Verbraucher elektrischer Energie mit geringerer Leistungsaufnahme eingewirkt wird.

5. Verfahren nach Anspruch 4,
**dadurch gekennzeichnet, dass** bei der eine Leistungsaufnahme von Verbrauchern elektrischer Energie berücksichtigenden Entlastungsstrategie sukzessive auf Verbraucher elektrischer Energie in einer Hierarchie mit Hierarchiegruppen a), b) und c) derart eingewirkt wird, dass zunächst auf wenigstens einen Verbraucher elektrischer Energie der Hierarchiegruppe a) eingewirkt wird, bei nach Einwirken auf wenigstens einen Verbraucher elektrischer Energie der Hierarchiegruppe a) weiterhin vorliegender zu hoher Belastung des Energiespeichers (58) auf wenigstens einen Verbraucher elektrischer Energie der Hierarchiegruppe b) eingewirkt wird und bei nach Einwirken auf wenigstens einen Verbraucher elektrischer Energie der Hierarchiegruppe b) weiterhin vorliegender zu hoher Belastung des Energiespeichers (58) auf wenigstens einen Verbraucher elektrischer Energie der Hierarchiegruppe c) eingewirkt wird, wobei die Hierarchiegruppen a), b) und c) folgende Verbraucher elektrischer Energie umfassen:
a) wenigstens einen wenigstens eine Fahr-Hydraulikpumpe (42, 44) antreibenden Fahr-Elektromotor (38) eines Fahr-Hydraulikkreislaufs (34),
b) wenigstens einen eine Unwuchtmasse (56) einer einer Bodenbearbeitungswalze (14, 22) zugeordneten Unwuchtanordnung (16, 24) antreibenden Unwucht-Elektroantriebsmotor (54),
c) wenigstens einen Kleinverbraucher (60) elektrischer Energie, wobei die Kleinverbraucher (60) elektrischer Energie umfassen: einen Kühler-Gebläsemotor für die Kühlung von Elektronikkomponenten oder/und einen Kühler-Gebläsemotor für die Kühlung von Hydraulikfluid oder/und eine Sitzheizung (62) oder/und eine Bedienstandheizung oder/und eine Klimaanlage oder/und eine Wasserpumpe oder/und eine Additivpumpe oder/und eine Arbeitsbeleuchtung oder/und eine Fahrbeleuchtung (66) oder/und eine Audioanlage oder/und einen Frischluft/Umluft-Gebläsemotor oder/und eine Steckdose.

6. Verfahren nach einem der Ansprüche 1-3,
**dadurch gekennzeichnet, dass** bei der eine Betriebsrelevanz von Verbrauchern elektrischer Energie berücksichtigenden Entlastungsstrategie sukzessive auf Verbraucher elektrischer Energie in einer Hierarchie mit Hierarchiegruppen e), f) und g) derart eingewirkt wird, dass zunächst auf wenigstens einen Verbraucher elektrischer Energie der Hierarchiegruppe e) eingewirkt wird, bei nach Einwirken auf wenigstens einen Verbraucher elektrischer Energie der Hierarchiegruppe e) weiterhin vorliegender zu hoher Belastung des Energiespeichers (58) auf wenigstens einen Verbraucher elektrischer Energie der Hierarchiegruppe f) eingewirkt wird und bei nach Einwirken auf wenigstens einen Verbraucher elektrischer Energie der Hierarchiegruppe f) weiterhin vorliegender zu hoher Belastung des Energiespeichers (58) auf wenigstens einen Verbraucher elektrischer Energie der Hierarchiegruppe g) eingewirkt wird, wobei die Hierarchiegruppen e), f) und g) folgende Verbraucher elektrischer Energie umfassen:
e) wenigstens einen Kleinverbraucher (60) elektrischer Energie, wobei die Kleinverbraucher (60) elektrischer Energie umfassen: einen Kühler-Gebläsemotor für die Kühlung von Elektronikkomponenten oder/und einen Kühler-Gebläsemotor für die Kühlung von Hydraulikfluid oder/und eine Sitzheizung (62) oder/und eine Bedienstandheizung oder/und eine Klimaanlage oder/und eine Wasserpumpe oder/und eine Additivpumpe oder/und eine Arbeitsbeleuchtung oder/und eine Fahrbeleuchtung (66) oder/und eine Audioanlage oder/und einen Frischluft/Umluft-Gebläsemotor oder/und eine Steckdose,
f) wenigstens einen wenigstens eine Fahr-Hydraulikpumpe (42, 44) antreibenden Fahr-Elektromotor (38) eines Fahr-Hydraulikkreislaufs (34),
g) wenigstens einen eine Unwuchtmasse (56) einer einer Bodenbearbeitungswalze (14, 22) zugeordneten Unwuchtanordnung (16, 24) antreibenden Unwucht-Elektroantriebsmotor (54).

7. Verfahren nach einem der vorangehenden Ansprüche,
**dadurch gekennzeichnet, dass** die Bodenbearbeitungsmaschine (10) wenigstens zwei Bodenbearbeitungswalzen (14, 22) mit jeweils einer Unwuchtanordnung (16, 24) mit wenigstens einer durch wenigstens einen Unwucht-Elektroantriebsmotor (54) zur Drehung antreibbaren Unwuchtmasse (56) umfasst, wobei dann, wenn bei in Betrieb gesetzten Unwuchtanordnungen (16, 24) der wenigstens zwei Bodenbearbeitungswalzen (14, 22) das Vorliegen eines Zustandes übermäßiger Belastung des Energiespeichers (58) erkannt wird, die einer der Bodenbearbeitungswalzen (14, 22) zugeordnete Unwuchtanordnung deaktiviert wird oder mit geringerer Drehzahl betrieben wird, und wobei bei weiterhin vorliegender zu hoher Belastung des Energiespeichers (58) die einer anderen der Bodenbearbeitungswalzen (14, 22) zugeordnete Unwuchtanordnung deaktiviert wird oder mit geringerer Drehzahl betrieben wird.

8. Verfahren nach einem der vorangehenden Ansprüche,
**dadurch gekennzeichnet, dass** die Bodenbearbeitungsmaschine (16) wenigstens zwei Bodenbearbeitungswalzen (14, 22) mit jeweils einer Unwuchtanordnung (16, 24) mit wenigstens einer durch wenigstens einen Unwucht-Elektroantriebsmotor (54) zur Drehung antreibbaren Unwuchtmasse (56) umfasst, wobei die einer der Bodenbearbeitungswalzen (14, 22) zugeordnete Unwuchtanordnung (16, 24) eine Vibrationsanordnung zur Erzeugung einer im Wesentlichen orthogonal zu einer Drehachse (D) der einen Bodenbearbeitungswalze (14, 22) wirkenden Kraft umfasst und die einer anderen der Bodenbearbeitungswalzen (14, 22) zugeordnete Unwuchtanordnung (16, 24) eine Oszillationsanordnung zur Erzeugung einer im Wesentlichen tangential zu einer Drehachse (D) der anderen Bodenbearbeitungswalze wirkenden Kraft umfasst, wobei dann, wenn bei in Betrieb gesetzten Unwuchtanordnungen (16, 24) der wenigstens zwei Bodenbearbeitungswalzen (14, 22) das Vorliegen eines Zustandes übermäßiger Belastung des Energiespeichers (58) erkannt wird, die der anderen der Bodenbearbeitungswalzen (14, 22) zugeordnete Unwuchtanordnung deaktiviert oder mit geringerer Drehzahl betrieben wird, und wobei bei weiterhin vorliegender zu hoher Belastung des Energiespeichers (54) die der einen der Bodenbearbeitungswalzen (14, 22) zugeordnete Unwuchtanordnung deaktiviert wird oder mit geringerer Drehzahl betrieben wird.

9. Verfahren nach einem der vorangehenden Ansprüche,
**dadurch gekennzeichnet, dass** Bodenbearbeitungsmaschine (10) wenigstens eine Bodenbearbeitungswalze (14, 22) mit einer Unwuchtanordnung (16, 24) mit wenigstens einer durch wenigstens einen Unwucht-Elektroantriebsmotor (54) zur Drehung antreibbaren Unwuchtmasse (56) umfasst, wobei die Unwuchtanordnung (14, 22) in einem Vibrationsbetrieb zur Erzeugung einer im Wesentlichen orthogonal zu einer Drehachse (D) der Bodenbearbeitungswalze (14, 22) wirkenden Kraft und in einem Oszillationsbetrieb zur Erzeugung einer im Wesentlichen tangential zu einer Drehachse (D) der Bodenbearbeitungswalze (14, 22) wirkenden Kraft betreibbar ist, wobei dann, wenn bei im Oszillationsbetrieb betriebener Unwuchtanordnung (16, 24) der wenigstens einen Bodenbearbeitungswalze (14, 22) das Vorliegen eines Zustandes übermäßiger Belastung des Energiespeichers (58) erkannt wird, der Oszillationsbetrieb der Unwuchtanordnung (16, 24) beendet oder mit geringerer Drehzahl fortgesetzt wird, oder/und dann, wenn bei im Vibrationsbetrieb betriebener Unwuchtanordnung (16, 24) der wenigstens einen Bodenbearbeitungswalze (14, 22) das Vorliegen eines Zustandes übermäßiger Belastung des Energiespeichers (58) erkannt wird, der Vibrationsbetrieb beendet wird oder mit geringerer Drehzahl fortgesetzt wird.

10. Verfahren nach einem der vorangehenden Ansprüche,
**dadurch gekennzeichnet, dass** die Bodenbearbeitungsmaschine (10) wenigstens einen wenigstens eine Fahr-Hydraulikpumpe (40) antreibenden Fahr-Elektromotor (38) eines Fahr-Hydraulikkreislaufs (34) und wenigstens einen wenigstens eine Lenk-Hydraulikpumpe (48) antreibenden Lenk-Elektromotor (46) eines Lenk-Hydraulikkreislaufs (36) umfasst, wobei bei Inbetriebnahme der Bodenbearbeitungsmaschine (10) wenigstens ein, vorzugsweise jeder Lenk-Elektromotor (46) vor wenigstens einem, vorzugsweise jedem Fahr-Elektromotor (38) in Betrieb gesetzt wird.

11. Verfahren nach Anspruch 10,
**dadurch gekennzeichnet, dass** die Bodenbearbeitungsmaschine (10) wenigstens eine Bodenbearbeitungswalze (14, 22) mit einer Unwuchtanordnung (16, 24) mit wenigstens einer durch wenigstens einen Unwucht-Elektroantriebsmotor (54) zur Drehung antreibbaren Unwuchtmasse (56) umfasst, wobei bei Inbetriebnahme der Bodenbearbeitungsmaschine (10) wenigstens ein, vorzugsweise jeder Fahr-Elektromotor (38) vor wenigstens einem, vorzugsweise jedem Unwucht-Elektroantriebsmotor (54) in Betrieb gesetzt wird.

12. Verfahren nach einem der vorangehenden Ansprüche,
**dadurch gekennzeichnet, dass** ein Ladezustand des Energiespeichers (58) erfasst wird und dann, wenn das Vorliegen eines Zustandes zu geringer Ladung des Energiespeichers (58) erkannt wird, wenigstens ein Verbraucher elektrischer Energie deaktiviert wird oder/und die Leistungsaufnahme von wenigstens einem Verbraucher elektrischer Energie verringert wird.
